(19) Europäisches Patentamt
European Patent Office
Office européen des brevets

(11) EP 4 130 318 A1

(12) EUROPEAN PATENT APPLICATION
published in accordance with Art. 153(4) EPC

(43) Date of publication:
08.02.2023 Bulletin 2023/06

(51) International Patent Classification (IPC):
C22C 38/00 (1974.07)    C22C 38/26 (1974.07)
C21D 9/34 (1968.09)

(21) Application number: 21776077.6

(22) Date of filing: 25.03.2021

(52) Cooperative Patent Classification (CPC):
C22C 38/00; C22C 38/26; C21D 9/34

(86) International application number:
PCT/JP2021/012494

(87) International publication number:
WO 2021/193808 (30.09.2021 Gazette 2021/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.03.2020 JP 2020056886

(71) Applicant: NIPPON STEEL CORPORATION
Chiyoda-ku
Tokyo 100-8071 (JP)

(72) Inventors:
• MAEJIMA, Taketo
  Tokyo 100-8071 (JP)
• KUBOTA, Manabu
  Tokyo 100-8071 (JP)

(74) Representative: Zimmermann & Partner
Patentanwälte mbB
Postfach 330 920
80069 München (DE)

(54) **TRAIN WHEEL**

(57) A railway wheel in which formation of a quenched layer can be suppressed in the production process is provided. The railway wheel according to the present embodiment has a chemical composition consisting of, in mass%, C: 0.80 to 1.15%, Si: 1.00% or less, Mn: 0.10 to 1.20%, P: 0.050% or less, S: 0.030% or less, Al: 0.005 to 0.190%, N: 0.0200% or less, Nb: 0.005 to 0.050%, Cr: 0 to 0.25%, and V: 0 to 0.12%, with the balance being Fe and impurities. In the microstructure of a rim part of the railway wheel, an area fraction of pro-eutectoid cementite is 0.1 to 1.5% and an area fraction of pearlite is 95.0% or more.

FIG. 2

**Description**

TECHNICAL FIELD

The present disclosure relates to a railway wheel.

BACKGROUND ART

A railway vehicle travels on a rail constituting a railway track. A railway vehicle includes a plurality of railway wheels. The railway wheel supports the vehicle keeping in contact with the rail and moves on the rail while rotating thereon. The railway wheel wears due to the contact with the rail. Recently, for the purpose of increasing the efficiency of railway transportation, increases in the loading weight on railway vehicles and increases in the speeds of railway vehicles have been sought. As a result, there is a demand to improve the wear resistance of railway wheels.

Technologies to improve the wear resistance of railway wheels have been proposed in Japanese Patent Application Publication No. 9-202937 (Patent Literature 1), Japanese Patent Application Publication No. 2012-107295 (Patent Literature 2), Japanese Patent Application Publication No. 2013-231212 (Patent Literature 3), Japanese Patent Application Publication No. 2004-315928 (Patent Literature 4).

A railway wheel disclosed in Patent Literature 1 consists of, in mass%, C: 0.4 to 0.75%, Si: 0.4 to 0.95%, Mn: 0.6 to 1.2%, Cr: 0 to less than 0.2%, P: less than 0.03%, and S: 0.03% or less, with the balance being Fe and unavoidable impurities. In this railway wheel, a region from the surface of the wheel tread part to a depth of at least 50 mm is composed of a pearlite structure. A method for producing a railway wheel disclosed in Patent Literature 1 includes a quenching step in which the wheel tread part is cooled under such a condition that a cooling curve of the wheel tread part passes through a pearlite forming region in a continuous cooling transformation curve, and resides on the long-time side of the martensite transformation curve.

A wheel steel disclosed in Patent Literature 2 has a chemical composition consisting of, in mass%, C: 0.65 to 0.84%, Si: 0.02 to 1.00%, Mn: 0.50 to 1.90%, Cr: 0.02 to 0.50%, V: 0.02 to 0.20%, S ≤ 0.04%, P ≤ 0.05%, Cu ≤ 0.20%, and Ni ≤ 0.20%, with the balance being Fe and impurities. The chemical composition further satisfies the following relational expressions:

$$[34 \leq 2.7 + 29.5 \times C + 2.9 \times Si + 6.9 \times Mn + 10.8 \times Cr + 30.3 \times Mo + 44.3 \times V \leq 43]$$

and

$$[0.76 \times \exp(0.05 \times C) \times \exp(1.35 \times Si) \times \exp(0.38 \times Mn) \times \exp(0.77 \times Cr) \times \exp(3.0 \times Mo) \times \exp(4.6 \times V) \leq 25].$$

Patent Literature 2 states that by satisfying the above chemical composition and the above expressions, this wheel steel is excellent in wear resistance, a rolling fatigue resistance characteristic, and spalling resistance.

A wheel steel disclosed in Patent Literature 3 consists of, in mass%, C: 0.65 to 0.84%, Si: 0.4 to 1.0%, Mn: 0.50 to 1.40%, Cr: 0.02 to 0.13%, S: 0.04% or less, and V: 0.02 to 0.12%, with the balance being Fe and impurities, wherein Fn1 defined by Formula (1) is 32 to 43, and Fn2 defined by Formula (2) is 25 or less. Where, Formula (1) is Fn1=2.7+29.5C+2.9Si+6.9Mn+10.8Cr+30.3Mo+44.3V, and Formula (2) is Fn2=exp(0.76)×exp(0.05C)×exp(1.35Si)×exp(0.38Mn)×exp(0.77Cr)×exp(3.0Mo)×e xp(4.6V). Patent Literature 3 states that by having the above chemical composition and Fn1 and Fn2 satisfying the aforementioned ranges, this wheel steel is excellent in wear resistance, a rolling fatigue resistance characteristic, and spalling resistance.

A railway wheel disclosed in Patent Literature 4 is an integrated railway wheel composed of steel having a chemical composition consisting of, in mass%, C: 0.85 to 1.20%, Si: 0.10 to 2.00%, Mn: 0.05 to 2.00%, and further, as needed, a predetermined amount of one or more elements selected from Cr, Mo, V, Nb, B, Co, Cu, Ni, Ti, Mg, Ca, Al, Zr and N, with the balance being Fe and other unavoidable impurities, wherein at least a part of the tread and/or the flange surface of the railway wheel has a pearlite structure. Patent Literature 4 states that the life of the railway wheel depends on the amount of wear of the tread and the flange surface (paragraph [0002] of Patent Literature 4), and further depends on a crack in the tread and the flange surface which is caused by an increase in calorific value when brakes are applied in a high-speed railway. It also states that when the railway wheel has the aforementioned configuration, wear and heat cracking of the tread and the flange surface can be suppressed.

CITATION LIST

PATENT LITERATURE

    Patent Literature 1: Japanese Patent Application Publication No. 9-202937
    Patent Literature 2: Japanese Patent Application Publication No. 2012-107295
    Patent Literature 3: Japanese Patent Application Publication No. 2013-231212
    Patent Literature 4: Japanese Patent Application Publication No. 2004-315928

SUMMARY OF INVENTION

TECHNICAL PROBLEM

In the railway wheel proposed in Patent Literature 1, the Cr content is kept to a low amount and an appropriate amount of Si is contained to obtain an appropriate hardenability and a property to facilitate obtaining a pearlite structure. However, the C content of the railway wheel according to Patent Literature 1 is 0.4 to 0.75%, and thus the railway wheel is made of a so-called hypo-eutectoid steel. Consequently, there is a limitation on improving wear resistance.

In the wheel steels proposed in Patent Literature 2 and Patent Literature 3, by containing V in a steel having a C content of 0.65 to 0.84%, the pearlite structure is strengthened, thereby improving wear resistance. However, there is a limitation on the extent of improvement in wear resistance obtained merely by containing V.

On the other hand, in the railway wheel proposed in Patent Literature 4, wear resistance is improved by using a hyper-eutectoid steel in which the C content is increased.

In this connection, one example of a method for producing a railway wheel is as follows. A billet is subjected to hot working to form an intermediate product having a railway wheel shape. The formed intermediate product is subjected to heat treatment (tread quenching). In the tread quenching, after the intermediate product is heated, a rim part (particularly the tread and flange part of the rim part) of the intermediate product is rapidly cooled. By this means, fine pearlite which has high wear resistance is formed in the matrix structure of a near-surface portion of the tread. However, in the near-surface portion of the tread after tread quenching, a quenched layer is formed in a layer above the fine pearlite. The quenched layer is a hard layer composed of martensite, or is a hard layer composed of martensite and bainite. The quenched layer is liable to wear during use of the railway wheel. Therefore, after tread quenching, the quenched layer which has been formed at the outermost layer of the tread is removed by cutting in a manner so that the fine pearlite is exposed to the tread. A railway wheel is produced by the foregoing process.

As described above, a railway wheel made of a hyper-eutectoid steel is excellent in wear resistance. However, when a railway wheel is produced by the aforementioned production method using a hyper-eutectoid steel, because the C content is large, a quenched layer is liable to be formed deeply after tread quenching. The quenched layer is a layer which is to be removed by cutting, and if the quenched layer is formed deeply, it takes time to perform cutting to remove the quenched layer. Therefore, it is preferable that formation of the quenched layer can be reduced as much as possible in the production process.

An objective of the present disclosure is to provide a railway wheel that is made of a hyper-eutectoid steel in which the C content is a high content of 0.80% or more, and in which formation of a quenched layer can be suppressed in the production process.

SOLUTION TO PROBLEM

A railway wheel according to the present disclosure includes:

    a rim part,
    a hub part, and
    a web part which is disposed between the rim part and the hub part and is linked to the rim part and the hub part, wherein
    a chemical composition of the railway wheel consists of, in mass%:

    C: 0.80 to 1.15%,
    Si: 1.00% or less,
    Mn: 0.10 to 1.20%,
    P: 0.050% or less,

S: 0.030% or less,
Al: 0.005 to 0.190%,
N: 0.0200% or less,
Nb: 0.005 to 0.050%,
Cr: 0 to 0.25%, and
V: 0 to 0.12%,
with the balance being Fe and impurities,
and wherein

in a microstructure of the rim part of the railway wheel,
an area fraction of pro-eutectoid cementite is 0.1 to 1.5%, and
an area fraction of pearlite is 95.0% or more.

ADVANTAGEOUS EFFECTS OF INVENTION

According to the railway wheel of the present embodiment, formation of a quenched layer can be suppressed in the production process even when the C content is a high content of 0.80% or more.

BRIEF DESCRIPTION OF DRAWINGS

[FIG. 1] FIG. 1 is a cross-sectional view including a center axis of a railway wheel.
[FIG. 2] FIG. 2 is a diagram illustrating the relation between distance from a water-cooled end and a Rockwell hardness HRC obtained by a Jominy end-quench test using a test material for which a railway wheel is assumed.

DESCRIPTION OF EMBODIMENTS

[Configuration of railway wheel]

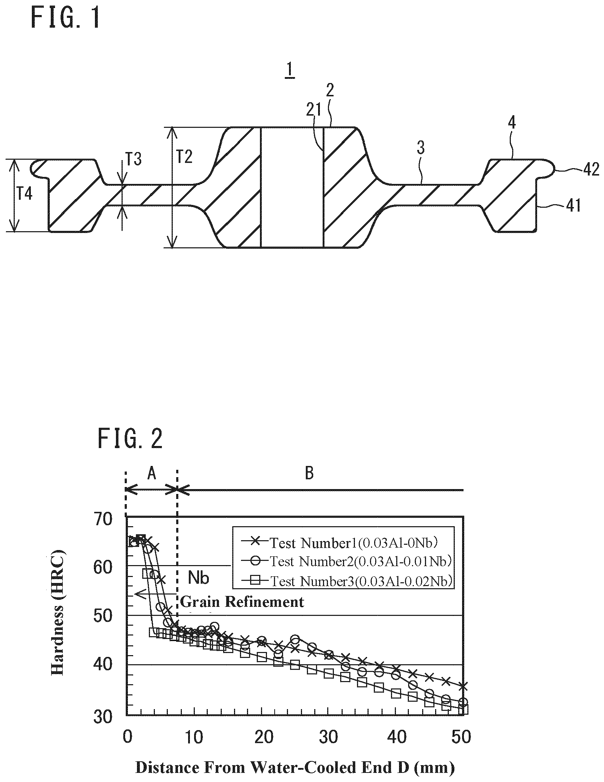

FIG. 1 is a cross-sectional view including a center axis of a railway wheel according to the present embodiment. Referring to FIG. 1, a railway wheel 1 has a disc shape and includes a hub part 2, a web part 3, and a rim part 4. The hub part 2 has a cylindrical shape and is disposed in a middle part of the railway wheel 1 in a radial direction (direction perpendicular to the center axis) of the railway wheel 1. The hub part 2 has a through hole 21. The center axis of the through hole 21 corresponds to the center axis of the railway wheel 1. A railway axle, not shown, is inserted into the through hole 21. A thickness T2 of the hub part 2 is larger than a thickness T3 of the web part 3. The rim part 4 is formed in an edge part in the outer circumference of the railway wheel 1. The rim part 4 includes a tread 41 and a flange part 42. The tread 41 is linked with the flange part 42. The tread 41 and the flange part 42 are in contact with a rail surface while the railway wheel 1 is used. A thickness T4 of the rim part 4 is larger than the thickness T3 of the web part 3. The web part 3 is disposed between the hub part 2 and the rim part 4 and is linked with the hub part 2 and the rim part 4. Specifically, an inner circumferential edge part of the web part 3 is linked with the hub part 2, and an outer circumferential edge part of the web part 3 is linked with the rim part 4. The thickness T3 of the web part 3 is smaller than the thickness T2 of the hub part 2 and the thickness T4 of the rim part 4.

First, the present inventors conducted studies regarding a chemical composition appropriate for improving wear resistance in a railway wheel. As a result, it has been found that in a railway wheel, even when the same hardness is obtained, wear resistance when used as a railway wheel is improved more when the hardness is increased by increasing the C content to be 0.80% or more, than when the hardness is increased by increasing the V content. Although this mechanism is not clear, it is considered that the following matters are involved in the mechanism.
The tread of the railway wheel being used is subjected to an external force (load) from the rail. The cementite in the pearlite in the outer layer immediately below the tread is crushed by this external force, and thus the hardness is further increased by dispersion strengthening. In addition, carbon in crushed fine cementite dissolves in a supersaturated manner into ferrite in the pearlite, thereby increasing the hardness of the outer layer immediately below the tread by solid-solution strengthening.

When the C content in the steel is increased, the volume fraction of cementite in pearlite will increase, and in addition, pearlite is likely to form finer lamellas. In this case, the wear resistance of the railway wheel will be improved by the aforementioned mechanism. In contrast, when V is contained in the steel, the hardness of the steel is increased by precipitation strengthening of V carbo-nitrides. In this case, since V carbo-nitrides are formed in ferrite, mainly the hardness of ferrite is increased. In other words, when V is contained, although the V increases the hardness of ferrite, it does not significantly affect refinement of pearlite. For this reason, although wear resistance can be improved to some extent by containing V, wear resistance cannot be improved as much as it is improved by dispersion strengthening caused by crushed cementite and solid-solution strengthening of C.

Therefore, the present inventors considered that in order to improve wear resistance, for the chemical composition of a railway wheel, it is preferable to use a hyper-eutectoid steel having a C content of 0.80 to 1.15%.

However, as a result of investigations conducted by the present inventors, it has been found that in a railway wheel made of a hyper-eutectoid steel having a C content of 0.80% or more, a quenched layer is formed more deeply by tread quenching in the process for producing the railway wheel in comparison to the case of a railway wheel made of a hypo-eutectoid steel. As described above, in the railway wheel production process, a quenched layer formed in the rim part 4 (the tread 41 and the flange part 42) is removed by cutting. Therefore, the quenched layer is preferably as thin as possible. The present inventors thus conducted studies regarding means that can reduce a quenched layer which is formed during the production process in a railway wheel made of hyper-eutectoid steel having a C content of 0.80% or more.

[Suppression of formation of quenched layer]

FIG. 2 is a diagram illustrating the relation between distance from a water-cooled end and a Rockwell hardness HRC obtained by a Jominy end-quench test using a test material for which a railway wheel is assumed. FIG. 2 was obtained by the following method.

Specimens (round bar specimens having a diameter of 25 mm and a length of 100 mm) having chemical compositions shown in Table 1 were prepared.

[Table 1]

TABLE 1

| Test Number | Chemical Composition (unit is mass%; balance is Fe and impurities) | | | | | | | |
| --- | --- | --- | --- | --- | --- | --- | --- | --- |
| | C | Si | Mn | P | S | Al | N | Nb |
| 1 | 1.00 | 0.30 | 0.80 | ≤0.050 | ≤0.030 | 0.034 | 0.0040 | 0.000 |
| 2 | 1.01 | 0.28 | 0.79 | ≤0.050 | ≤0.030 | 0.030 | 0.0048 | 0.009 |
| 3 | 1.00 | 0.28 | 0.79 | ≤0.050 | ≤0.030 | 0.030 | 0.0050 | 0.020 |

Referring to Table 1, Test Number 1 containing no Nb, Test Number 2 having an Nb content of 0.009%, and Test Number 3 having an Nb content of 0.020% were prepared. A Jominy end-quench test conforming to JIS G0561 (2011) was conducted using the prepared specimens. Specifically, each Jominy test specimen was held in a furnace at 950°C, which is a temperature not less than the $A_{cm}$ transformation point, in atmosphere for 30 minutes so that the structure of the Jominy test specimen was turned into austenite single phase. Thereafter, end-quenching (water cooling) was performed. Specifically, water was sprayed to cool one end of the Jominy test specimen.

After water cooling, a side face of the Jominy test specimen which had been subjected to water cooling was mechanically polished and a Rockwell hardness (HRC) test using the C scale conforming to JIS Z 2245 (2011) was conducted from the one end (water-cooled end) at a constant interval in the axial direction. The measurement interval of HRC was set to a pitch of 1.0 mm in a range from the water-cooled end to a 15 mm position, and a pitch of 2.5 mm at positions that were 15 mm or more from the water-cooled end. The obtained HRC values were plotted to create FIG. 2.

Referring to FIG. 2, the Rockwell hardness HRC rapidly decreases as a distance D from the water-cooled end increases. Further, when the distance D becomes a predetermined distance or more, the Rockwell hardness HRC does not decrease so much even if the distance from the water-cooled end increases. A region A from the water-cooled end to a position at which the Rockwell hardness HRC rapidly decreases is defined as a "quenched layer". Further, a region B which is a region that is deeper than the region A and in which the Rockwell hardness HRC has not significantly decreased is defined as a "base metal".

Referring to FIG. 2, the depth of the quenched layer decreased as the Nb content increased. Therefore, in a railway wheel, if Nb is contained, the formation of a quenched layer which is formed by tread quenching in the production process can be suppressed.

The possible reason that formation of a quenched layer formed by tread quenching in the production process can be suppressed by containing Nb is as follows. In a case where Nb is contained, fine Nb carbides form during heating for tread quenching. The fine Nb carbides refine prior-austenite grains. The larger that prior-austenite grains are, the more that the hardenability increases. Therefore, when the prior-austenite grains are refined, the hardenability decreases. As a result, formation of a quenched layer can be suppressed.

Note that it is also conceivable to contain V to form VC, and cause VC to function as a pinning particle. However, in the case of the aforementioned chemical composition, VC has a lower dissolution temperature than NbC. Therefore, the VC will dissolve during the heating for tread quenching, and cannot function as a pinning particle. When V is contained, as described above, in the cooling stage in tread quenching, although VC precipitates in ferrite to strengthen the ferrite, it is considered that VC cannot refine austenite grains as pinning particles.

Since the above described mechanism is an assumption, there is also a possibility that formation of a quenched layer is suppressed and prior-austenite grains are refined by a different mechanism. However, it is clear from Examples to be described later that in a railway wheel having the aforementioned chemical composition, if Nb is contained, formation of a quenched layer can be suppressed.

The railway wheel of the present embodiment which has been completed based on the findings described above has the following configuration.

[1] A railway wheel, including:

a rim part,
a hub part, and
a web part which is disposed between the rim part and the hub part and is linked to the rim part and the hub part, wherein
a chemical composition of the railway wheel consists of, in mass%:

C: 0.80 to 1.15%,
Si: 1.00% or less,
Mn: 0.10 to 1.20%,
P: 0.050% or less,
S: 0.030% or less,
Al: 0.005 to 0.190%,
N: 0.0200% or less,
Nb: 0.005 to 0.050%,
Cr: 0 to 0.25%, and
V: 0 to 0.12%,
with the balance being Fe and impurities,
and wherein

in a microstructure of the rim part of the railway wheel,
an area fraction of pro-eutectoid cementite is 0.1 to 1.5%, and
an area fraction of pearlite is 95.0% or more.

[2] The railway wheel according to [1], wherein

the chemical composition satisfies Formula (1):

$$100Nb/(C+0.5Si+0.8Mn+15Al+40Cr+10V) \geq 0.070...(1)$$

where, a content in mass% of a corresponding element is substituted for each symbol of an element in Formula (1).

[3] The railway wheel according to [1] or [2], wherein
the chemical composition contains one or more elements selected from a group consisting of:

Cr: 0.02 to 0.25%, and
V: 0.02 to 0.12%.

Hereunder, the railway wheel of the present embodiment is described in detail. In the present description, unless otherwise stated, the symbol "%" in relation to an element means mass%.

[Chemical composition of railway wheel]

The chemical composition of the railway wheel of the present embodiment contains the following elements.

C: 0.80 to 1.15%

Carbon (C) increases the hardness of the steel, and increases the wear resistance of the railway wheel. If the C content is less than 0.80%, this effect cannot be obtained even when the contents of other elements are within the ranges of the present embodiment. On the other hand, if the C content is more than 1.15%, a large amount of pro-eutectoid cementite may precipitate at prior-austenite grain boundaries even when the contents of other elements are within the ranges of the present embodiment. In this case, the toughness of the railway wheel decreases. Therefore, the C content is 0.80 to 1.15%. The lower limit of the C content is preferably 0.85%, more preferably 0.86%, further preferably 0.87%, further preferably 0.90%, and further preferably 0.95%. The upper limit of the C content is preferably 1.10%, and more preferably 1.05%.

Si: 1.00% or less

Silicon (Si) is unavoidably contained. In other words, the Si content is more than 0%. Si performs solid-solution strengthening of ferrite, thereby increasing the hardness of steel. However, if the Si content is more than 1.00%, even when the contents of other elements are within the ranges of the present embodiment, pro-eutectoid cementite that is a cause of a decrease in the toughness of steel is liable to be formed. In addition, if the Si content is more than 1.00%, the hardenability of the steel will be too high, and martensite is liable to be formed. In such a case, the thickness of a quenched layer formed on the tread during tread quenching increases. As a result, the amount of cutting increases and the yield decreases. Further, if the Si content is more than 1.00%, a hardening effect is caused by frictional heat generated between the railway wheel and the brake during use of the railway wheel. In such a case, the crack resistance of the railway wheel may decrease. Therefore, the Si content is 1.00% or less. The upper limit of the Si content is preferably 0.90%, more preferably 0.80%, further preferably 0.70%, further preferably 0.60%, further preferably 0.45%, further preferably 0.40%, and further preferably 0.35%. The lower limit of the Si content is not particularly limited. However, excessively decreasing the Si content will increase the production cost. Therefore, the lower limit of the Si content is preferably 0.01%, more preferably 0.05%, further preferably 0.10%, and further preferably 0.15%.

Mn: 0.10 to 1.20%

Manganese (Mn) performs solid-solution strengthening of ferrite, thereby increasing the hardness of the steel. In addition, Mn forms MnS and thereby improves the machinability of steel. If the Mn content is less than 0.10%, even when the contents of other elements are within the ranges of the present embodiment, these effects cannot be sufficiently obtained. On the other hand, if the Mn content is more than 1.20%, even when the contents of other elements are within the ranges of the present embodiment, the hardenability of the steel will become too high. In such a case, the thickness of the quenched layer increases, and the yield in the production process decreases. Further, a hardening effect is caused by frictional heat generated between the railway wheel and the brake during use of the railway wheel, and the crack resistance of the steel may decrease. Therefore, the Mn content is 0.10 to 1.20%. The lower limit of the Mn content is preferably 0.30%, more preferably 0.50%, and further preferably 0.70%. The upper limit of the Mn content is preferably 1.00%, more preferably 0.90%, and further preferably 0.85%.

P: 0.050% or less

Phosphorus (P) is an impurity that is unavoidably contained. In other words, the P content is more than 0%. P segregates at grain boundaries and thereby decreases the toughness of the steel. Therefore, the P content is 0.050% or less. The upper limit of the P content is preferably 0.030%, and more preferably 0.020%. The P content is preferably as low as possible. However, excessively decreasing the P content will increase the production cost. Therefore, in consideration of ordinary industrial manufacturing, the lower limit of the P content is preferably 0.001%, and more preferably 0.002%.

S: 0.030% or less

Sulfur (S) is unavoidably contained. In other words, the S content is more than 0%. S forms MnS and thereby enhances the machinability of the steel. On the other hand, if the S content is too high, the toughness of the steel will decrease. Therefore, the S content is 0.030% or less. The upper limit of the S content is preferably 0.020%, more preferably 0.015%, further preferably 0.012%, and further preferably 0.010%. Excessively reducing the S content will increase the production cost. Therefore, the lower limit of the S content is preferably 0.001%, more preferably 0.002%, further preferably 0.003%, and further preferably 0.005%.

Al: 0.005 to 0.190%

Aluminum (Al) deoxidizes the steel. If the Al content is less than 0.005%, even when the contents of other elements are within the ranges of the present embodiment, the aforementioned effect cannot be sufficiently obtained. On the other hand, if the Al content is more than 0.190%, the aforementioned effect will be saturated. Therefore, the Al content is 0.005 to 0.190%. The lower limit of the Al content is preferably 0.008%, and more preferably 0.010%. The upper limit of the Al content is preferably 0.180%, more preferably 0.170%, further preferably 0.150%, further preferably 0.120%, further preferably 0.100%, further preferably 0.080%, further preferably 0.060%, and further preferably 0.050%.

N: 0.0200% or less

Nitrogen (N) is an impurity that is unavoidably contained. That is, the N content is more than 0%. If the N content is more than 0.0200%, AlN will coarsen, thereby decreasing the toughness of the steel. Therefore, the N content is 0.0200% or less. The upper limit of the N content is preferably 0.0100%, more preferably 0.0080%, further preferably 0.0070%, and further preferably 0.0060%. The N content is preferably as low as possible. However, excessively decreasing the N content will raise the production cost. Therefore, in consideration of ordinary industrial manufacturing, the lower limit of the N content is preferably 0.0001%, more preferably 0.0010%, and further preferably 0.0025%.

Nb: 0.005 to 0.050%

Niobium (Nb) combines with C to form fine NbC during heating for tread quenching in the process for producing the railway wheel. The fine NbC functions as a pinning particle to suppress coarsening of austenite during heating. For that reason, the prior-austenite grains are kept fine, and thus the hardenability of the steel is kept from becoming high. As a result, formation of a quenched layer in the railway wheel production process is suppressed. Nb also enhances the toughness of the steel material by suppressing the coarsening of prior-austenite grains. If the Nb content is less than 0.005%, even when the contents of other elements are within the ranges of the present embodiment, the aforementioned effects cannot be sufficiently obtained. On the other hand, if the Nb content is more than 0.050%, even when the contents of other elements are within the ranges of the present embodiment, the NbC will coarsen and the toughness of the steel material will, on the contrary, decrease. Therefore, the Nb content is 0.005 to 0.050%. The lower limit of the Nb content is preferably 0.007%, and more preferably 0.009%. The upper limit of the Nb content is preferably 0.040%, more preferably 0.035%, further preferably 0.030%, further preferably 0.025%, and further preferably 0.023%.

The balance in the chemical composition of the railway wheel according to the present embodiment is Fe and impurities. Here, the term "impurities" refers to elements which, during industrial production of the railway wheel of the present embodiment, are mixed in from ore or scrap that is used as a raw material, or from the production environment or the like, and which are allowed within a range that does not adversely affect the railway wheel of the present embodiment.

[Optional elements]

The chemical composition of the railway wheel of the present embodiment may further contain Cr in lieu of a part of Fe.

Cr: 0 to 0.25%

Chromium (Cr) is an optional element and need not be contained. In other words, the Cr content may be 0%. When contained, Cr narrows the lamellar spacing of pearlite. This significantly increases the hardness of the pearlite. However, if the Cr content is more than 0.25%, even when the contents of other elements are within the ranges of the present embodiment, the hardenability will be excessively high, and the thickness of the quenched layer after tread quenching will increase excessively. Therefore, the Cr content is 0 to 0.25%. The lower limit of the Cr content is preferably more than 0%, more preferably 0.01%, further preferably 0.02%, and further preferably 0.03%. The upper limit of the Cr content is preferably 0.24%, more preferably 0.23%, and further preferably 0.22%.

The chemical composition of the railway wheel of the present embodiment may also contain V in lieu of a part of Fe.

V: 0 to 0.12%

Vanadium (V) is an optional element and need not be contained. In other words, the V content may be 0%. When contained, V forms any of carbides, nitrides and carbo-nitrides, thereby precipitation strengthening the steel (specifically, ferrite in the steel). As a result, the hardness of the railway wheel is increased, thereby further enhancing wear resistance. However, if the V content is more than 0.12%, the hardenability will become high, and the thickness of the quenched layer after tread quenching will increase excessively. Therefore, the V content is 0 to 0.12%. The lower limit of the V content is preferably more than 0%, more preferably 0.01%, further preferably 0.02%, and further preferably 0.03%. The upper limit of the V content is preferably 0.11%, and more preferably 0.10%.

[Microstructure of rim part of railway wheel]

In the microstructure of the rim part 4 of the railway wheel 1 of the present embodiment, the area fraction of pearlite is 95.0% or more, and the area fraction of pro-eutectoid cementite is 0.1 to 1.5%. In the microstructure of the rim part 4, the phases other than pearlite and pro-eutectoid cementite are, for example, martensite and/or bainite. The lower limit of the area fraction of the pro-eutectoid cementite may be 0.2% or may be 0.3%. The upper limit of the area fraction of the pro-eutectoid cementite is preferably 1.4%, further preferably 1.3%, further preferably 1.2%, further preferably 1.1%, further preferably 1.0%, and further preferably 0.9%.

The area fraction of pearlite and area fraction of pro-eutectoid cementite in the microstructure of the rim part 4 are determined by the following method. Samples are taken from a central position in the thickness direction of the rim part 4 (central position of the thickness T4 illustrated in FIG. 1). The observation surface of each sample is mirror-finished by mechanical polishing. Thereafter, the observation surface is etched using a sodium picric acid solution (100 ml of water + 2 g of picric acid + 25 g of sodium hydroxide). In the etching, the sample is immersed in a boiled sodium picric acid solution. A photographic image is generated using an optical microscope with a magnification of 200× for any one visual field (500 μm × 500 μm) in the observation surface of the sample after etching. In the observation surface, the contrasts of the respective phases (pearlite, pro-eutectoid cementite, martensite and bainite) are different from each other.

Therefore, it is possible to distinguish the respective phases of the microstructure based on contrast. Pearlite and pro-eutectoid cementite are identified based on contrast. The area fraction (%) of pearlite is determined based on the total area of the identified pearlite and the area of the observation visual field. The area fraction (%) of pro-eutectoid cementite is determined based on the total area of the identified pro-eutectoid cementite and the area of the observation visual field.

As described in the foregoing, in the railway wheel 1 of the present embodiment, the content of each element in the chemical composition is within the corresponding range of the present embodiment, and in the microstructure of the rim part 4, the area fraction of pearlite is 95.0% or more and the area fraction of pro-eutectoid cementite is 0.1 to 1.5%. Therefore, in the railway wheel 1 of the present embodiment, even when pro-eutectoid cementite is present in the rim part 4, appropriate toughness is obtained. In addition, in the railway wheel 1 of the present embodiment, the aforementioned chemical composition contains Nb in an amount within the range of 0.005 to 0.050%. Therefore, the depth of a quenched layer formed in tread quenching in the production process can be kept from becoming a deep depth.

[Regarding Formula (1)]

Preferably the chemical composition of the railway wheel of the present embodiment satisfies Formula (1).

$$100Nb/(C+0.5Si+0.8Mn+15Al+40Cr+10V) \geq 0.070...(1)$$

Where, a content in mass% of a corresponding element is substituted for each symbol of an element in Formula (1).

Let F1 be defined as $F1 = 100Nb/(C+0.5Si+0.8Mn+15Al+40Cr+10V)$. F1 is an index of the depth of a quenched layer that can be formed during the process for producing the railway wheel. Specifically, as described above, Nb suppresses formation of a quenched layer. On the other hand, it is considered that C, Si, Mn, Al, Cr and V promote formation of a quenched layer. F1 adopts an element forming quenched layer (Nb) as the numerator, and adopts elements promoting quenched layer (C, Si, Mn, Al, Cr, V) as the denominator. If F1 is 0.070 or more, the content of the element suppressing quenched layer (Nb) is sufficiently large relative to the content of the elements promoting quenched layer. In this case, the depth of a quenched layer formed in tread quenching during the railway wheel production process can be kept to sufficiently moderate. The lower limit of F1 is preferably 0.080, more preferably 0.090, further preferably 0.100, further preferably 0.150, further preferably 0.200, further preferably 0.250, further preferably 0.300, and further preferably 0.340. F1 is a value obtained when the obtained value is rounded off to three decimal places.

A further preferable lower limit of F1 is 0.380. In this case, the depth of a quenched layer formed in tread quenching during the railway wheel production process can be kept sufficiently moderate to an even further extent. A further preferable lower limit of F1 is 0.390, and further preferably is 0.395.

[Method for producing railway wheel]

One example of a method for producing the railway wheel described above will now be described. The present production method includes a step of producing railway wheel steel (starting material production step), a step of forming an intermediate product having a wheel shape from the railway wheel steel by hot working (forming step), a step of performing a heat treatment (tread quenching) on the formed intermediate product (heat treatment step), and a step of obtaining a railway wheel by removing the quenched layer by cutting from the tread and the like of the intermediate product after the heat treatment (cutting step). Each step is described hereunder.

[Starting material production step]

In the starting material production step, molten steel having the chemical composition described above is produced using an electric furnace, a converter or the like. The produced molten steel is then cast to obtain a cast material (a cast piece or an ingot). A cast piece may be produced by continuous casting, or an ingot may be produced by casting with a mold.

The cast piece or ingot is subjected to hot working to produce a steel material for a railway wheel (hereunder, also referred to as "steel material") having a desired size. The hot working is, for example, hot forging or hot rolling. In the case of producing the steel material by hot rolling, for example, the steel material is produced by the following method. In the hot rolling, for example, a blooming mill is used. The starting material is subjected to blooming by the blooming mill to produce a steel material. In a case where a continuous mill is installed downstream of the blooming mill, the steel material after blooming may be further subjected to hot rolling using the continuous mill to produce a steel material of an even smaller size. In the continuous mill, a horizontal stand having a pair of horizontal rolls, and a vertical stand having a pair of vertical rolls are alternately arranged in a row. Although not particularly limited, the heating temperature of the reheating furnace in the hot rolling is, for example, 1100 to 1350°C. The steel material for a railway wheel is produced by the foregoing production process.

Note that the steel material for a railway wheel may be a cast material (a cast piece or an ingot). In other words, the above described hot working may be omitted. According to the process described above, a steel material for a railway wheel which is the starting material for a railway wheel is produced. The steel material for a railway wheel is, for example, a starting material having a cylindrical shape.

[Forming step]

In the forming step, the prepared steel material for a railway wheel is used to form an intermediate product having a wheel shape by hot working. Since the intermediate product has a wheel shape, it includes a hub part, a web part, and a rim part including a tread and a flange part. The hot working is, for example, hot forging, hot rolling or the like.

The heating temperature of the steel material for a railway wheel during hot working is preferably 1220°C or more. In this case, NbC in the steel material for a railway wheel will sufficiently dissolve in a heating step during hot working. The lower limit of the heating temperature during hot working is preferably 1230°C, more preferably 1250°C, and further preferably 1300°C. The upper limit of the heating temperature during hot working is preferably 1350°C. Note that a method for cooling the intermediate product after the hot working is not particularly limited. The intermediate product may be allowed to cool, or may be water-cooled.

[Heat treatment step]

In the heat treatment step, the formed intermediate product having a wheel shape is subjected to tread quenching. Specifically, the intermediate product after the forming step (hot forging or hot rolling) is reheated to the $A_{cm}$ transformation point or higher (reheating treatment). After heating, the tread and the flange part of the intermediate product are subjected to rapid cooling (tread quenching). For example, the tread and the flange part are cooled using a cooling medium. The cooling medium is, for example, air, mist, or spray, and is not particularly limited as long as a cooling rate appropriate for a desired structure can be obtained. Note that at the time of tread quenching, the web part and the hub part are allowed to cool without being water-cooled. By this means, in the rim part, even though the area fraction of pro-eutectoid cementite can be suppressed to 1.5% or less, the area fraction of the pro-eutectoid cementite will be 0.1% or more.

The diameter of the railway wheel of the present embodiment is, for example, 700 mm to 1000 mm. Further, a preferable cooling rate of the tread during tread quenching is 3.0 to 200.0°C/sec. In addition, in the rim part of the intermediate product during tread quenching, a preferable cooling rate of a region where the cooling rate is slowest is 1.5°C/sec or more. In this case, in the microstructure of the rim part, even though the area fraction of pro-eutectoid cementite will be 0.1% or more, the area fraction of pro-eutectoid cementite can be suppressed to 1.5% or less. A region of the intermediate product where the cooling rate is slowest can be determined, for example, by measuring changes in the temperature distribution of the intermediate product during tread cooling by using a plurality of thermographic devices. More preferably, in the rim part of the intermediate product during tread quenching, a preferable cooling rate of the region where the cooling rate is slowest is 2.0°C/sec or more.

Although in the above description the intermediate product is reheated, the intermediate product after the hot working may be directly subjected to the tread quenching (without being reheated).

The intermediate product after the tread quenching is subjected to tempering as necessary. It is sufficient if the tempering is performed at a well-known temperature for a well-known time. The tempering temperature is, for example, 400 to 600°C.

[Cutting step]

As described above, while fine pearlite is formed in the outer layer of the tread of the intermediate product after the heat treatment, a quenched layer is formed in the layer thereabove. Since the wear resistance of the quenched layer is low with respect to the use of the railway wheel, the quenched layer is removed by cutting. It is sufficient if the cutting is performed by a well-known method.

The railway wheel of the present embodiment is produced by the above processes. In the railway wheel of the present embodiment, the content of each element in the chemical composition is within the corresponding range of the present embodiment, and in the microstructure of the rim part, the area fraction of pearlite is 95.0% or more and the area fraction of pro-eutectoid cementite is 0.1 to 1.5%. Therefore, in the railway wheel of the present embodiment, even though pro-eutectoid cementite is formed, an appropriate toughness is obtained. In addition, in the railway wheel of the present embodiment, the aforementioned chemical composition contains Nb in an amount of 0.005 to 0.050%. Therefore, the depth of the quenched layer formed in tread quenching during the production process can be kept to a moderate depth.

EXAMPLE

[Example 1]

Molten steels of Test Numbers 1 to 18 having chemical compositions shown in Table 2 were produced.

[Table 2]

TABLE 2

| Test Number | Chemical Composition (unit is mass%; balance is Fe and impurities) | | | | | | | | | | F1 | Cooling Rate (°C/sec) | Pearlite Area Fraction (%) | Proeutectoid θ Area Fraction (%) | Prior-γ grain size (μm) | Quenched Layer Depth (mm) | Toughness Evaluation | Remarks |
|---|---|---|---|---|---|---|---|---|---|---|---|---|---|---|---|---|---|---|
| | C | Si | Mn | P | S | Al | N | Nb | Cr | V | | | | | | | | |
| 1 | 1.01 | 0.28 | 0.79 | 0.001 | 0.001 | 0.030 | 0.0048 | 0.009 | | | 0.403 | 3.0 | ≥95.0 | 0.6 | 22 | 7.0 | ○ | Inventive Example of Present Invention |
| 2 | 1.00 | 0.28 | 0.79 | 0.001 | 0.001 | 0.030 | 0.0050 | 0.020 | | | 0.900 | 3.0 | ≥95.0 | 0.8 | 19 | 4.0 | ○ | Inventive Example of Present Invention |
| 3 | 1.02 | 0.28 | 0.81 | 0.001 | 0.001 | 0.011 | 0.0042 | 0.021 | | | 1.064 | 3.0 | ≥95.0 | 0.8 | 21 | 7.0 | ○ | Inventive Example of Present Invention |
| 4 | 1.05 | 0.06 | 0.80 | 0.001 | 0.001 | 0.160 | 0.0043 | 0.025 | | | 0.607 | 3.0 | ≥95.0 | 0.8 | 23 | 6.0 | ○ | Inventive Example of Present Invention |
| 5 | 1.01 | 0.05 | 0.45 | 0.007 | 0.007 | 0.031 | 0.0038 | 0.023 | 0.08 | 0.02 | 0.437 | 3.0 | ≥95.0 | 0.7 | 20 | 7.0 | ○ | Inventive Example of Present Invention |
| 6 | 1.01 | 0.20 | 0.80 | 0.001 | 0.001 | 0.031 | 0.0039 | 0.024 | 0.11 | | 0.363 | 3.0 | ≥95.0 | 0.7 | 21 | 8.0 | ○ | Inventive Example of Present Invention |
| 7 | 1.00 | 0.30 | 0.80 | 0.001 | 0.002 | 0.034 | 0.0040 | | | | 0.000 | 3.0 | ≥95.0 | 0.7 | 25 | 9.0 | ○ | Comparative Example |

(continued)

| Test Number | Chemical Composition (unit is mass%; balance is Fe and impurities) | | | | | | | | | | F1 | Cooling Rate (°C/sec) | Pearlite Area Fraction (%) | Proeutectoid θ Area Fraction (%) | Prior-γ grain size (μm) | Quenched Layer Depth (mm) | Toughness Evaluation | Remarks |
|---|---|---|---|---|---|---|---|---|---|---|---|---|---|---|---|---|---|---|
| | C | Si | Mn | P | S | Al | N | Nb | Cr | V | | | | | | | | |
| 8 | 1.03 | 0.29 | 0.79 | 0.001 | 0.001 | 0.063 | 0.0041 | | | | 0.000 | 3.0 | ≥95.0 | 0.0 | 28 | 9.0 | ○ | Comparative Example |
| 9 | 1.03 | 0.29 | 0.80 | 0.001 | 0.001 | 0.100 | 0.0044 | | | | 0.000 | 3.0 | ≥95.0 | 0.0 | 30 | 10.0 | ○ | Comparative Example |
| 10 | 0.94 | 0.43 | 0.80 | 0.001 | 0.001 | 0.150 | 0.0045 | 0.002 | | | 0.049 | 3.0 | ≥95.0 | 0.0 | 32 | 10.0 | ○ | Comparative Example |
| 11 | 1.03 | 0.29 | 0.80 | 0.001 | 0.001 | 0.200 | 0.0046 | | | | 0.000 | 3.0 | ≥95.0 | 0.0 | 47 | 9.0 | ○ | Comparative Example |
| 12 | 1.00 | 0.29 | 0.81 | 0.001 | 0.002 | 0.300 | 0.0034 | | | | 0.000 | 3.0 | ≥95.0 | 0.0 | 57 | 10.0 | - | Comparative Example |
| 13 | 1.02 | 0.28 | 0.81 | 0.001 | 0.001 | 0.570 | 0.0035 | 0.003 | | | 0.029 | 3.0 | ≥95.0 | 0.0 | 71 | 14.0 | - | Comparative Example |
| 14 | 1.00 | 0.30 | 0.80 | 0.001 | 0.002 | 0.610 | 0.0034 | | | | 0.000 | 3.0 | ≥95.0 | 0.0 | 81 | 17.5 | - | Comparative Example |
| 15 | 1.01 | 0.28 | 0.79 | 0.001 | 0.001 | 0.030 | 0.0048 | 0.009 | | | 0.403 | 0.1 | ≥95.0 | 7.1 | 22 | - | × | Comparative Example |
| 16 | 1.00 | 0.28 | 0.79 | 0.001 | 0.001 | 0.030 | 0.0050 | 0.020 | | | 0.900 | 0.1 | ≥95.0 | 5.5 | 19 | - | × | Comparative Example |
| 17 | 1.01 | 0.28 | 0.79 | 0.001 | 0.001 | 0.030 | 0.0048 | 0.009 | | | 0.403 | 1.0 | ≥95.0 | 1.7 | 22 | - | - | Comparative Example |
| 18 | 1.00 | 0.28 | 0.79 | 0.001 | 0.001 | 0.030 | 0.0050 | 0.020 | | | 0.900 | 1.0 | ≥95.0 | 2.3 | 19 | - | - | Comparative Example |

In Table 2, a blank space in the column "Chemical Composition" means that the content of the corresponding element was less than the detection limit. For example, it means that the Nb content of Test Number 7 in Table 2 was 0% when rounded off to three decimal places. Similarly, it means that the Cr content of Test Number 1 was 0% when rounded off to two decimal places. Likewise, it means that the V content of Test Number 1 was 0% when rounded off to two decimal places.

Simulating the starting material production step of the process for producing a railway wheel, round ingots (ingots in a truncated cone shape having an upper face diameter of 107 mm, a bottom face diameter of 97 mm, and a height of 230 mm) were produced by an ingot-making process using the molten steels described above. Simulating the forming step in the process for producing a railway wheel, each ingot was heated to 1250°C and thereafter was subjected to hot forging to produce a round bar having a diameter of 40 mm.

[Simulated tread quenching test]

A simulated tread quenching test which simulated tread quenching during the process for producing a railway wheel was conducted, and the area fraction of pearlite, area fraction of pro-eutectoid cementite, and quenched layer depth after the simulated tread quenching test were determined as follows.

[Measurement of area fraction of pearlite and area fraction of pro-eutectoid cementite]

A heat treatment test specimen having a diameter of 3 mm and a length of 10 mm was prepared from a D/4 depth position ("D" represents the diameter of the round bar) in the radial direction from the surface of the round bar of each test number. The longitudinal direction of the heat treatment test specimen was parallel to the direction of center axis of the round bar.

A continuous cooling test which simulated tread quenching was conducted using the prepared heat treatment test specimens. A Formaster tester manufactured by Fuji Electronic Industrial Co., Ltd. was used for the heat treatment. Specifically, a test specimen of each test number was prepared and held at 950°C for 5 minutes. Thereafter, the test specimen was cooled at a cooling rate (°C/sec) shown in Table 2. For each test specimen after cooling, the area fraction (%) of pearlite and the area fraction (%) of pro-eutectoid cementite (pro-eutectoid $\theta$) were determined by the following method.

A sample was fabricated in which a cross section perpendicular to the longitudinal direction of the aforementioned heat treatment test specimen was used as the observation surface. After the observation surface was mechanically polished, the observation surface was etched using a sodium picric acid solution (100 ml of water + 2 g of picric acid + 25 g of sodium hydroxide). In the etching, the sample was immersed in a boiled sodium picric acid solution. A photographic image was generated using an optical microscope with a magnification of 200$\times$ for any one visual field (500 $\mu$m $\times$ 500 $\mu$m) in the observation surface after etching. Based on contrast, pearlite and pro-eutectoid cementite in the observation visual field were identified, and the area fraction (%) of pearlite and the area fraction (%) of pro-eutectoid cementite were determined. The results showed that in each of the test numbers the area fraction of pearlite was 95.0% or more. Further, the area fraction of pro-eutectoid cementite (pro-eutectoid $\theta$) of each test number was as shown in Table 2.

[Quenched layer depth measurement test]

The Jominy end-quench test was conducted to measure the depth of the quenched layer. The Jominy end-quench test was conducted by the following method. A Jominy test specimen having a diameter of 25 mm and a length of 100 mm was fabricated from a round bar having a diameter of 40 mm of each test number. The center axis of the Jominy test specimen corresponded to the center axis of the round bar. A Jominy end-quench test conforming to JIS G0561 (2011) was conducted using the Jominy test specimen. Specifically, the Jominy test specimen was held in a furnace at 950°C which is a temperature not less than the $A_{cm}$ transformation point in atmosphere for 30 minutes, to turn the structure of the Jominy test specimen into an austenite single phase. Thereafter, end-quenching (water cooling) was performed. Specifically, the Jominy test specimen was cooled by spraying water onto one end thereof.

After water cooling, a side face of the Jominy test specimen which had been subjected to water cooling was mechanically polished and a Rockwell hardness (HRC) test using the C scale conforming to JIS Z 2245 (2011) was conducted at a constant interval in the axial direction from the one end (water-cooled end). The measurement interval of HRC was set to a pitch of 1.0 mm in a range from the water-cooled end to a 15 mm position, and a pitch of 2.5 mm at positions that were 15 mm or more from the water-cooled end. From the obtained HRC distribution, the quenched layer depth was determined by the following method.

A Jominy curve shown in FIG. 2 was created for the steel material of each test number. As described above, in the Jominy curve, a region A in which the Rockwell hardness HRC rapidly decreased was defined as a "quenched layer", and a region B in which the Rockwell hardness HRC did not decrease so much was defined as a "base metal".

The region A and the region B can be separated through an inflection point. A quenched layer depth (mm) was determined by identifying the region A from the HRC distribution (Jominy curve) of each test number. Note that, the quenched layer depth measurement test was not performed for Test Numbers 15 to 18 (indicated by "-" in the "Quenched Layer Depth" column in Table 2).

[Prior-austenite grain size measurement test]

A heat treatment test specimen having a diameter of 3 mm and a length of 10 mm was fabricated from a D/4 depth position in the radial direction from the surface of the round bar of each test number. The longitudinal direction of the heat treatment test specimen was parallel to the direction of center axis of the round bar.

A continuous cooling test was conducted using the fabricated heat treatment test specimens. A Formaster tester manufactured by Fuji Electronic Industrial Co., Ltd. was used for the heat treatment. Specifically, a test specimen for each test number was held at 950°C for 5 minutes. Thereafter, the test specimen was cooled at a cooling rate of 0.01 to less than 0. 1°C/sec. Samples were fabricated in which a cross section perpendicular to the longitudinal direction of the respective test specimens after cooling was used as the observation surface. After the observation surface was mechanically polished, the observation surface was etched using a sodium picric acid solution (100 ml of water + 2 g of picric acid + 25 g of sodium hydroxide). In the etching, the sample was immersed in a boiled sodium picric acid solution. A photographic image was generated using an optical microscope with a magnification of 200× for any one visual field in the observation surface after etching. The observation visual field was a square visual field of 500 $\mu$m × 500 $\mu$m. Prior-austenite grains were identified by judging that a portion where pro-eutectoid cementite was precipitated was a grain boundary of prior-austenite grain based on contrast. The grain size of the identified prior-austenite grains was determined by an intercept method. Specifically, two diagonal lines were drawn in the square visual field. Then, a total sum of the number of pieces of pro-eutectoid cementite (prior-austenite grain boundaries) intersecting with these two diagonal lines was calculated. The grain size ($\mu$m) of prior-austenite grains was then determined by the following formula. The grain sizes ($\mu$m) of the prior-austenite grains that were obtained are shown in Table 2.

$$\text{Grain size of prior-austenite grain} = \text{total length of two diagonal lines/total}$$

$$\text{number of pieces of pro-eutectoid cementite intersecting with diagonal lines}$$

[Toughness test]

The toughness of the round bar of each test number was evaluated by the following method. Specifically, four square-bar-shaped materials each having a width of 12 mm, a height of 12 mm and a length of 70 mm were collected from the round bar of each test number. Each square-bar-shaped material was collected from the round bar while avoiding a range of a radius of 4 mm from the central axis thereof. The longitudinal direction of the square-bar-shaped material was parallel to the longitudinal direction of the round bar.

A continuous cooling test simulating tread quenching was conducted on the square-bar-shaped materials. A thermal cycle tester manufactured by Fuji Electronic Industrial Co., Ltd. was used for the heat treatment. The square-bar-shaped material was held at 950°C for 5 minutes. Thereafter, the square-bar-shaped material was cooled at a cooling rate shown in Table 2. Through the processes described above, a heat treatment which simulated a railway wheel production process was performed. After the heat treatment, each square-bar-shaped material was subjected to machining to fabricate a U-notch test specimen having a width of 10 mm, a height of 10 mm, and a length of 55 mm.

The produced U-notch test specimens were subjected to the Charpy impact test conforming to JIS Z 2242 (2005) in the atmosphere at normal temperature to determine Charpy impact values (J/cm$^2$). The average value of four values was defined as the Charpy impact value (J/cm$^2$) of the relevant test number. If the obtained Charpy impact value (J/cm$^2$) was 12.5 J/cm$^2$ or more, the relevant test number was evaluated as being excellent in toughness (indicated by the symbol "O" in the "Toughness Evaluation" column in Table 2). On the other hand, if the obtained Charpy impact value (J/cm$^2$) was less than 12.5 J/cm$^2$, the relevant test number was evaluated as being low in toughness (indicated by the symbol "×" in the "Toughness Evaluation" column in Table 2). Note that, the toughness test was not conducted for Test Numbers 12 to 14, 17 and 18 (indicated by the symbol "-" in the "Toughness Evaluation" column in Table 2).

[Test results]

The test results are shown in Table 2. Referring to Table 2, in each test number, the microstructure was a structure composed substantially of pearlite. That is, the area fraction of pearlite was 95.0% or more.

In addition, in Test Numbers 1 to 6, the chemical composition was appropriate, and the cooling condition in the heat treatment step was appropriate. Therefore, the area fraction of pro-eutectoid cementite was 0.1 to 1.5%. Consequently, the Charpy impact value ($J/cm^2$) was 12.5 $J/cm^2$ or more, and the toughness was high. In addition, the quenched layer depth was 8.0 mm or less, and it could be estimated that formation of a quenched layer which is formed during tread quenching can be suppressed. Note that, Test Numbers 1 to 6 satisfied Formula (1).

On the other hand, in Test Numbers 7 to 10, the Nb content was less than 0.005%. Therefore, the depth of the quenched layer was 9.0 mm or more, which was deep. Note that, the prior-austenite grains in Test Numbers 7 to 10 were large compared to the prior-austenite grains in Test Numbers 1 to 6.

In Test Numbers 11 to 14, the Al content was too high and the Nb content was less than 0.005%. Therefore, the depth of the quenched layer was 9.0 mm or more, which was deep. Note that, Test Numbers 7 to 14 did not satisfy Formula (1).

In Test Numbers 15 and 16, the cooling condition in the heat treatment step was too slow. Therefore, the area fraction of pro-eutectoid cementite was more than 1.5%. Consequently, the Charpy impact value ($J/cm^2$) was less than 12.5 $J/cm^2$, and the toughness was low. In Test Numbers 17 and 18 also, because the cooling condition in the heat treatment step was too slow, the area fraction of pro-eutectoid cementite was more than 1.5%.

An embodiment of the present invention has been described above.

However, the foregoing embodiment is merely an example for implementing the present invention. Accordingly, the present invention is not limited to the above embodiment, and the above embodiment can be appropriately modified within a range that does not deviate from the gist of the present invention.

REFERENCE SIGNS LIST

 1 Railway wheel
 2 Hub part
 3 Web part
 4 Rim part
 41 Tread
 42 Flange part

**Claims**

1. A railway wheel, comprising:

 a rim part,
 a hub part, and
 a web part which is disposed between the rim part and the hub part and is linked to the rim part and the hub part, wherein
 a chemical composition of the railway wheel consists of, in mass%:

  C: 0.80 to 1.15%,
  Si: 1.00% or less,
  Mn: 0.10 to 1.20%,
  P: 0.050% or less,
  S: 0.030% or less,
  Al: 0.005 to 0.190%,
  N: 0.0200% or less,
  Nb: 0.005 to 0.050%,
  Cr: 0 to 0.25%, and
  V: 0 to 0.12%,
  with the balance being Fe and impurities,
  and wherein

   in a microstructure of the rim part of the railway wheel,
   an area fraction of pro-eutectoid cementite is 0.1 to 1.5%, and
   an area fraction of pearlite is 95.0% or more.

2. The railway wheel according to claim 1, wherein

   the chemical composition satisfies Formula (1):

$$100Nb/(C+0.5Si+0.8Mn+15Al+40Cr+10V) \geq 0.070...(1)$$

   where, a content in mass% of a corresponding element is substituted for each symbol of an element in Formula (1).

3. The railway wheel according to claim 1 or claim 2, wherein
   the chemical composition contains one or more elements selected from a group consisting of:

   Cr: 0.02 to 0.25%, and
   V: 0.02 to 0.12%.

FIG. 1

FIG. 2

Distance From Water-Cooled End D (mm)

## INTERNATIONAL SEARCH REPORT

| International application No. |
|---|
| PCT/JP2021/012494 |

**A. CLASSIFICATION OF SUBJECT MATTER**
C22C 38/00(2006.01)i; C22C 38/26(2006.01)i; C21D 9/34(2006.01)n
FI: C22C38/00 301Z; C22C38/26; C21D9/34
According to International Patent Classification (IPC) or to both national classification and IPC

**B. FIELDS SEARCHED**

Minimum documentation searched (classification system followed by classification symbols)
C22C38/00-38/60; C21D9/34; B60B17/00

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/190088 A1 (JFE STEEL CORPORATION) 17 December 2015 (2015-12-17) | 1-3 |
| A | WO 2018/181861 A1 (NIPPON STEEL & SUMITOMO METAL CORPORATION) 04 October 2018 (2018-10-04) | 1-3 |
| A | WO 2017/104719 A1 (JFE STEEL CORPORATION) 22 June 2017 (2017-06-22) | 1-3 |
| A | CN 106521343 A (CENTRAL IRON & STEEL RESEARCH INSTITUTE) 22 March 2017 (2017-03-22) | 1-3 |
| A | CN 106521315 A (CENTRAL IRON & STEEL RESEARCH INSTITUTE) 22 March 2017 (2017-03-22) | 1-3 |
| P, A | WO 2020/067520 A1 (NIPPON STEEL CORPORATION) 02 April 2020 (2020-04-02) | 1-3 |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 04 June 2021 (04.06.2021) | 15 June 2021 (15.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application no. |
| --- |
| PCT/JP2021/012494 |

| Patent Documents referred in the Report | Publication Date | Patent Family | Publication Date |
| --- | --- | --- | --- |
| WO 2015/190088 A1 | 17 Dec. 2015 | US 2017/0191149 A1 CN 106460117 A | |
| WO 2018/181861 A1 | 04 Oct. 2018 | US 2020/0070569 A1 EP 3604599 A1 CN 110462090 A | |
| WO 2017/104719 A1 | 22 Jun. 2017 | US 2019/0249280 A1 CN 108431265 A | |
| CN 106521343 A | 22 Mar. 2017 | (Family: none) | |
| CN 106521315 A | 22 Mar. 2017 | (Family: none) | |
| WO 2020/067520 A1 | 02 Apr. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9202937 A
- JP 2012107295 A
- JP 2013231212 A
- JP 2004315928 A